# EUROPÄISCHE PATENTANMELDUNG

(11) **EP 3 954 479 A1**
(43) Veröffentlichungstag der Anmeldung: **16.02.2022**
(21) Anmeldenummer: 20400013.7
(22) Anmeldetag: 17.07.2020
(51) Int. Cl.: B22C 9/12

(54) **VORRICHTUNG ZUR VERSORGUNG EINES KERNFORMWERKZEUGES**

(30) Priorität: 17.07.2019 DE 102019119345
(71) Anmelder: Hänsel, Helge, 37671 Höxter (DE)
(72) Erfinder: Hänsel, Helge, 37671 Höxter (DE)
(74) Vertreter: Brandt, Detlef

(57) **Zusammenfassung**

Es wird eine Vorrichtung zur Versorgung eines Kernformwerkzeuges zur Herstellung eines Sandkerns für Gussteile mit einem gasförmigen Aushärtemedium für den Sandkern, wobei das Aushärtemedium aus einem Gemisch von Trägergas und einem Katalysatorelement besteht, mit einer Trägergasquelle, einer Aufheizvorrichtung für die Trägergas und einer Dosiereinheit für das Katalysatorelement vorgestellt, bei der erfindungsgemäß zwischen Trägergasquelle und Aufheizvorrichtung eine durch die Aufheizvorrichtung mit Wärmeenergie gespeiste Vorwärmevorrichtung für die Trägergas angeordnet ist, wobei Aufheizvorrichtung, Vorwärmevorrichtung und Dosiereinheit trennbar als Einzelmodule ausgestaltet sind.

## Beschreibung

### Technisches Umfeld

Die Erfindung betrifft eine Vorrichtung zur Versorgung eines Kernformwerkzeuges zur Herstellung eines Sandkerns für Gussteile mit einem gasförmigen Aushärtemedium für den Sandkern, wobei das Aushärtemedium aus einem Trägergas oder einem Gemisch von Trägergas und einem Katalysatorelement besteht, mit einer Vorheizvorrichtung, einer Aufheizvorrichtung für das Trägergas und einer Dosiereinheit für das Katalysatorelement.

### Stand der Technik

Sandkerne werden in Metallgießereien hergestellt und in Gussformen eingesetzt, um in den betreffenden Gussteilen Hohlräume ausbilden zu können. Die Sandkerne bestehen üblicherweise aus einem Formgrundstoff wie beispielsweise Sand, dem ein Bindemittel zugesetzt wird, um den Kernen nach einem Aushärteprozess eine geeignete Formstabilität und Festigkeit zu verleihen. Die Festigkeit muss dergestalt sein, dass die Kerne im Gießprozess formstabil sind, danach jedoch einfach aus dem Gussteil entfernt werden können. Zur Stabilisierung und Verfestigung der Sandkerne sind organische Bindemittel und anorganische Bindemittel bekannt. Die Sandkerne werden mittels Produktionseinheiten wie bspw. Kernschießmaschinen industriell hergestellt.

Abhängig von dem eingesetzten Bindemittel sind unterschiedliche Aushärteprozesse, wie bspw. gashärtende Verfahren bekannt.

Das bedeutet, dass bspw. das gashärtende Verfahren aus einem erhitzten Trägergas bspw. Druckluft und einem zur Beschleunigung der Reaktionsgeschwindigkeit des Bindemittels zugeführten Katalysatorelement besteht. Das Trägergas bspw. Druckluft wird über eine Trägergasquelle bereit gestellt. Das Katalysatorelement wird durch den Einfluss des erhitzten Trägergases gasförmig und bildet somit ein gasförmiges Aushärtemedium, das durch den permeablen Sandkern geleitet wird.

Die Beaufschlagung des Trägergases mit Temperatur wie auch die Zuführung des Katalysatorelementes zum Trägergas wird außerhalb der Produktionseinheit bspw. einer Kernschießmaschine in einer dafür geeigneten technischen Einheit vorgenommen. Das so aufbereitete Aushärtemedium wird anschließend dem Sandkern bspw. über eine Druckluftleitung innerhalb der Produktionseinheit zugeführt.

Anschließend wird eine Begasungshaube oder Begasungsplatte, die Bestandteil der Produktionseinheit ist, druckfest auf das Kernformwerkzeug aufgesetzt, über Anschlussbohrungen die sich auf der Unterseite der Begasungshaube oder Begasungsplatte befinden, das Aushärtemedium in die Einschusslöcher des Kernformkastens unter Druckbeaufschlagung transferiert und dem Sandkern zugeleitet und hindurchgeführt. Die Erhitzung des verwendeten Trägergas erfolgt dabei durch eine Aufheizvorrichtung der schon erwähnten externen technischen Einheit auf eine Temperatur im Bereich bis zu 130°C. Es ist leicht nachvollziehbar, dass hierbei ein nicht unbeträchtlicher Energieeinsatz notwendig ist, der die Kosten zur Herstellung des Gussteiles signifikant beeinflusst.

Die Vorrichtungen mit dem oben beschriebenen Aufbau in Form einer Begasungshaube oder Begasungsplatte haben sich in der Praxis durchaus bewährt. Allerdings besitzen sie prinzipiell zwei nicht unbeträchtliche Nachteile.

Von der thermischen Aufbereitung des gasförmigen Mediums außerhalb der Kernschießeinheit bis zur Begasungshaube oder Begasungsplatte innerhalb der Kernschießeinheit sind in der Regel lange Versorgungsleitungen notwendig. Diese Versorgungsleitungen verursachen erhebliche Energieverluste. In der Praxis ist festzustellen, dass bis zu 45 % der eingesetzten Energie auf dem Weg zur Kernschießeinheit verloren gehen.

Dies wird üblicherweise dadurch kompensiert, dass die Versorgungsleitungen zusätzlich beheizt werden. Darüber hinaus wird mit einem Überschuss des geforderten Temperaturniveaus des eingesetzten Trägergases gearbeitet. Das aufgeheizte Trägergas hat zusätzlich die Aufgabe, das zum Einsatz kommende Katalysatorelement von flüssigen in den gasförmigen Aggregatzustand zu überführen, um die katalytische beschleunigte Aushärtung des Bindemittels herbeizuführen. Dabei kann es in der Praxis zu Kondensationserscheinungen des Katalysatorelementes kommen, so dass beim Katalysatorelement ebenfalls mit einem Überschuss gearbeitet wird. Zusätzlich ist anzumerken, dass in der Anwendung des Katalysatorelementes und des Trägergases, insbesondere durch die Temperaturbeaufschlagung, größte Sorgfalt vorgehalten werden muss, da das Katalysatorelement und das Trägergas u. U. ein explosives Gemisch bilden können. In diesem Zusammenhang sind die jeweiligen sicherheitstechnischen Explosionsgrenzen einzuhalten.

Innerhalb der Begasungshaube oder Begasungsplatte treten zusätzlich bis zu 20 % Energieverluste auf, hervorgerufen durch eine strömungsungünstige Geometrie der innerhalb der Begasungshaube oder Begasungsplatte angeordneten Gaskanäle. Konventionelle Begasungshauben und Begasungsplatten dienen gemäß dem Stand der Technik dazu, das gasförmige Aushärtemedium dem Formstoff im Kernformwerkzeug zuzuführen. In der Regel sind die Gestaltungsmerkmale der bekannten Begasungshauben und Begasungsplatten von überschaubarer Komplexität.

### Aufgabe der Erfindung

Aufgabe der vorliegenden Erfindung ist es somit, eine Vorrichtung mit den im Gattungsbegriff des Anspruches 1 geschilderten Merkmalen so weiter zu entwickeln, bei der der für den Aushärteprozess eines Sandkernes notwendige Energieaufwand sowie der Katalysatoreinsatz herabgesetzt werden kann und bei dem der Reparatur-und Wartungsaufwand üblicher, aus dem Stand der Technik bekannter Vorrichtungen, optimiert wird und dass ein gefahrloser Umgang mit dem Katalysatorelement und dem Trägergas gewährleistet ist.

### Lösung der Aufgabe

Die definierte Aufgabe wird für eine Vorrichtung mit den gattungsbildenden Merkmalen des Anspruches 1 durch die im kennzeichnenden Teil des Anspruches offenbarte technische Lehre gelöst.

Erfindungswesentlich dabei ist es, dass zwischen Trägergasquelle und Aufheizvorrichtung eine durch die Aufheizvorrichtung mit Abwärme Energie gespeiste Vorwärmevorrichtung für das Trägergas angeordnet ist, wobei Aufheizvorrichtung, Vorwärmevorrichtung und Dosiereinheit trennbar konstruktiv als einzelne Module ausgestaltet sind.

Dabei müssen selbstverständlich die Aufheizvorrichtung und die Vorwärmevorrichtung unmittelbar benachbart angeordnet sein, da die Abwärme der Aufheizvorrichtung durch die Vorwärmevorrichtung aufgenommen werden soll. Bei herkömmlichen konstruktiven Gestaltungen besteht immer die Gefahr, dass die Abwärme hervorgerufen durch das aufgeheizte Aushärtemedium im Formstoff, der innerhalb des Schießkopfes der Kernschießmaschine als Bevorratung für den Formstoff dient, eine Aushärtereaktion im Bereich der Schussöffnungen hervorruft. Das Befüllen des Kernwerkzeuges mit Formstoff ist somit dann nicht mehr möglich.

Der erfinderische Gedanke liegt auch darin, neben der Energieeinsparung und Einsparungen beim Katalysatorelement durch den Aufbau und insbesondere die Anordnung der einzelnen Module die Aufheizvorrichtung und Vorwärmevorrichtung in modularer Bauweise innerhalb bspw. durch die Substituierung der konventionellen Begasungshaube oder Begasungsplatte durch die hier beschriebene Vorrichtung wie auch außerhalb der Kernschießmaschine zu installieren und diese Einheiten dann mit der Dosiereinheit innerhalb der Kernschießmaschine zu verbinden. Damit ist ein Aushärten der Schussöffnungen im Schiesskopf ausgeschlossen.

Der modulare Aufbau der erfindungsgemäßen Vorrichtung ermöglicht zum einen eine einfachere und schnellere Austauschbarkeit von Bauteilen bei Funktionsstörungen gegenüber herkömmlichen Begasungshauben und Begasungsplatten. Darüber hinaus lässt natürlich eine Aufspaltung der verwendeten Funktionseinheiten in Einzelbestandteile eine schnelle Anpassung an geänderte Rahmenbedingungen für den Einsatz der verwendeten Aushärtemedien zu. Die Aufspaltung in Einzeleinheiten erhöht darüber hinaus natürlich die Flexibilität der Gesamtvorrichtung im Hinblick auf Nutzung der vorhandenen Platzkapazitäten innerhalb und außerhalb der Kernschiessmaschine.

Durch geeignete Maßnahmen kann diese Wärmeübertragung auf die Vorwärmvorrichtung dazu beitragen, dass die vorrangig zur Aufheizung des Trägergases dienende Aufheizvorrichtung ihre Wärmeabstrahlenergie nicht mehr in dem Maße wie üblicherweise aus dem Stand der Technik bekannt in Richtung des an die Aufheizvorrichtung nahe positionierten Schießkopfes abgibt.

Ein Schießkopf dient innerhalb der Kernschiessmaschine dazu, den Formstoff für den Sandkern zu bevorraten und durch eine Fluidisierung, mit Hilfe von Druckluft, über entsprechende Einschussöffnungen den Formstoff in den Hohlraum des Kernwerkzeuges zu überführen. Je höher die Temperatur im Bereich des Schießkopfes und der Kernschießmaschine ist, kann es zu einer Aushärtung des Formstoffes innerhalb der Einschussöffnungen im Schießkopf kommen. Wenn dieser Fall eintritt, ist eine Überführung des Formstoffes in das Kernwerkzeug nicht mehr möglich. Die Einschussöffnungen müssen dann in einem komplizierten Prozess vom ausgehärteten Formstoff befreit werden.

Sofern somit durch die gezielte Abführung der überschüssigen Wärme der Aufheizvorrichtung zur Vorwärmevorrichtung eine generelle Herabsetzung der Gesamttemperatur im Schießkopf bzw. Kernschießmaschinenbereich herbei geführt werden kann, können derartige Störungen im Produktionsverlauf ausgeschlossen werden, da Formstoffreaktionen in den Schießkopföffnungen nicht mehr möglich sind.

Weiterbildungen und vorteilhafte Ausgestaltungen der erfindungsgemäßen Vorrichtung ergeben sich in Zusammenschau mit der technischen Lehre des Anspruches 1 zusätzlich aus den Merkmalen der auf den Hauptanspruch rückbezogenen Unteransprüche.

Es hat sich insbesondere als vorteilhaft erwiesen, in der Aufheizvorrichtung mindestens einen strömungsbegünstigten Trägergaskanal anzuordnen, wobei die Wände des Trägergaskanals wellenförmig ausgebildet sein können. Durch diese Maßnahme wird die Wärmeübergabe zwischen dem im Trägergaskanal befindlichen Heizkörper und dessen Oberfläche und dem durchlaufenden Trägergas erheblich verbessert.

Zusätzlich vorteilhaft ist es, wenn die Dosiervorrichtung einen Strömungskanal aufweist, der eine zur Aufheizvorrichtung weisende Verbindungsöffnung und eine zum Kernformwerkzeug weisende Austrittsöffnung aufweist, wobei zwischen Verbindungsöffnung und Austrittsöffnung der Dosiervorrichtung eine strömungsgünstige Strömungskanalverengung vorhanden ist und im Bereich dieser Strömungskanalverengung ein Dosierkanal für das Katalysatorelement mündet. Durch diese konstruktive Gestaltung wird die Strömungsgeschwindigkeit im Strömungskanal der Dosiervorrichtung in diesem Bereich gesteigert, so dass eine effektivere Durchmischung des Trägergases mit dem durch den Dosierkanal in die Dosiereinheit eingebrachten Katalysatorelement erfolgen kann. Die Dosierung des Katalysatorelementes erfolgt über den Einsatz einer Dosiereinheit bspw. in Form einer Doppelkolbenpumpe. Damit soll eine definierte reproduzierbare Menge des Katalysatorelementes im Trägergas gewährleistet sein. Darüber hinaus kann eine zusätzliche Einheit bspw. in Form einer Durchflussmesseinheit den Dosierprozess überwachen und damit eine Konzentration des Katalysatorelementes im Trägergas, im Bereich der jeweiligen Explosionsgrenzen, gewährleisten.

Ein weiteres Merkmal der vorliegenden Erfindung ist die Trennung der Aufheizvorrichtung und der Dosiervorrichtung in modularer Bauweise. Damit soll erreicht werden, dass eine Entzündung des Trägergas/Katalysatorgemisches bspw. durch die heiße Oberfläche eines verbauten Heizelementes nicht stattfinden kann. Die Dosierung des Katalysatorelementes und die Aufheizung des Trägergases sind voneinander entkoppelt. Darüber hinaus stellt sich in dem Dosierkanal ein Unterdruck ein, der die vollständige Zuführung des dosierten Katalysatorelementes unterstützt.

Um die Strömungsverhältnisse innerhalb des Strömungskanals der Dosiereinheit zusätzlich weiter zu verbessern, hat es sich als zweckmäßig erwiesen, im Bereich des Strömungskanals vor und nach der Strömungskanalverengung eine Vielzahl von Energiespeicherelementen anzuordnen. Die Energiespeicherelemente können dabei unterschiedliche strömungsgünstige Gestalt aufweisen, beispielsweise eine kugelförmige oder elipsenförmige Außengestalt. Bevorzugte Materialien der Energiespeicherelemente sind dabei hochleitfähige Materialien wie Fe, Cu oder Al. Die Energiespeicherelemente können dabei massiv ausgestaltet sein oder in ihrem Inneren einen Hohlraum aufweisen, der mit einem Energieträgermedium gefüllt ist. Der Einsatz der Energiespeicherelemente dient zum einen dazu, innerhalb des Strömungskanals eine diffuse Strömung zu erzeugen, die eine effektive Durchmischung der Trägergas mit dem Katalysatorelement unterstützt. Darüber hinaus haben die Energiespeicherelemente aufgrund ihrer konstruktiven Gestaltung die Eigenschaft, Wärmeenergie zu speichern. Diese Eigenschaft dient dazu, den Wechsel des Aggregatzustandes des eingesetzten Katalysatorelementes vom flüssigen Zustand in die gasförmige Phase zu unterstützen. Die Packungsdichte der Energiespeicherelemente ist so gestaltet, dass eine ausreichende Permeabilität der Schüttung für das durchströmende Gasgemisch jederzeit gegeben ist.

Eine negative Beeinflussung der Strömung durch die Sandkerne wird dabei vermieden. Die Anwendung der erfindungsgemäßen Vorrichtung mit den oben beschriebenen Merkmalen kann sowohl für organisch als auch anorganisch gebundene Bindemittel konzipiert sein, sofern sie mittels Gashärtung vonstatten gehen kann. Bei organisch oder anorganisch verwendeten Bindemitteln besteht ein wesentlicher Unterschied in den unterschiedlichen Temperaturniveaus des Aushärtemediums. Bei organischen Systemen wird vorrangig ein sogenanntes Coldbox-Verfahren eingesetzt, bei der die Aushärtung wesentlich durch das Katalysatorelement bewirkt wird und das Temperaturniveau im Bereich von vorzugsweise bis 130°C liegt. Im Bereich der anorganischen Bindemittelanwendung wird ausschließlich ein Trägergas bspw. Druckluft zur Aushärtung eingesetzt. Das Temperaturniveau wird bei dieser Anwendung vorzugweise bei 180°C gewählt.

### Figurenbeschreibung

Die erfindungsgemäße Vorrichtung wird nachfolgend anhand der beigefügten Zeichnungen näher erläutert. Es zeigt:
- Figur 1: ein Schemablockschaltbild der erfindungsgemäßen Vorrichtung mit ihren Einzelkomponenten
- Figur 2: eine Schnittdarstellung durch die Aufheizvorrichtung mit Darstellung der darin angeordneten Strömungskanäle
- Figur 3: eine perspektivische Einzeldarstellung des in der Dosiervorrichtung für das Katalysatorelement befindlichen Strömungskanals und
- Figur 4: eine Darstellung des Strömungskanals aus Figur 3 mit erfindungsgemäßen Energiespeicherelementen.

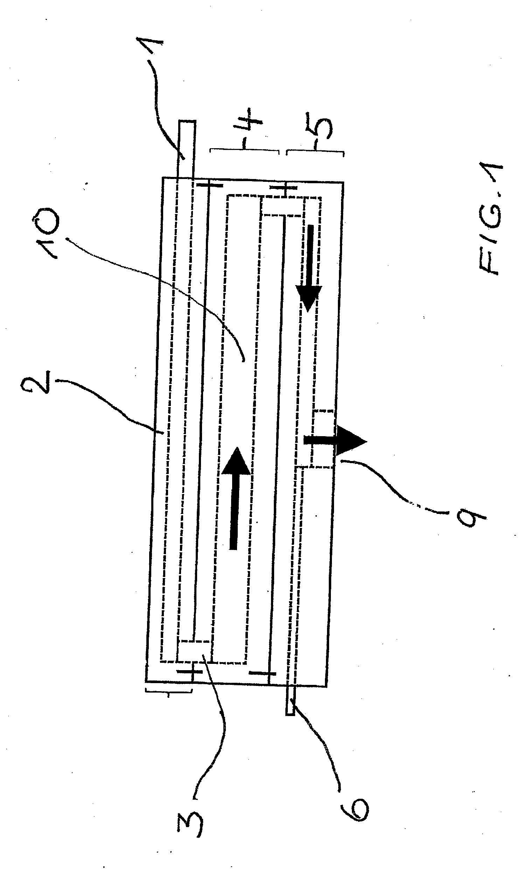

Die in der Figur 1 schematisch dargestellte erfindungsgemäße Vorrichtung besitzt mehrere als Einzelmodule gestaltete Bausteine, in denen das zur Versorgung eines Kernformwerkzeuges zur Herstellung eines Sandkerns für Gussteile notwendige gasförmige Aushärtemedium für den Sandkern für seine Funktion aufbereitet wird.

Das Aushärtemedium besteht dabei aus einem Gemisch von Trägergas und einem Katalysatorelement. Das Trägergas wird durch eine in der Figur 1 nicht näher dargestellte Trägergasquelle bereitgestellt. Trägergasquelle kann beispielsweise eine in vielen Industriebetrieben vorhandene Trägergasanlage sein, die über eine Mehrzahl von über den Betrieb verteilten Zapfstellen verfügt, an die gegebenenfalls auch Trägergaswerkzeuge angeschlossen werden können. Eine derartige Trägergasquelle stellt üblicherweise Trägergas von bis zu 6 bar Druck bei einer Umgebungstemperatur von 20 Grad zur Verfügung.

Die Temperatur des bereitgestellten Trägergas reicht für den speziellen Anwendungszweck in der Vorrichtung zur Versorgung eines Kernformwerkzeuges nicht aus, da hier Trägergastemperaturen von bspw. bis 130°C im organischen Bereich und bis ggfls.180 Grad im Bereich der anorganischen Bindemittel notwendig sind.

Diese Vorgabe macht die Erwärmung des bereitgestellten Trägergases notwendig.

Das Trägergas wird gemäß Figur 1 von der Trägergasquelle über eine entsprechende Rohrleitung oder einen Schlauch an den Einlassstutzen 1, der Bestandteil einer Vorwärmevorrichtung 2 für das Trägergas ist, geleitet. In der Vorwärmevorrichtung 2 ist ein Trägergaskanal eingearbeitet, durch den das Trägergas vom Einlassstutzen 1 zum Verbindungsrohr 3 geführt wird. Während des Durchlaufs durch die Vorwärmevorrichtung 2 nimmt das Trägergas Wärmeenergie des Vorwärmevorrichtungsgehäuses auf.

Das Verbindungsrohr 3 führt das Trägergas von der Vorwärmevorrichtung 2 zu einer Aufheizvorrichtung 4, in der das vorgewärmte Trägergas auf die für ihre Funktion als Aushärtemedium notwendige Temperatur bis 180 Grad aufgeheizt wird. Die Aufheizung erfolgt vorzugsweise elektrisch durch entsprechende Heizstäbe, die in der Figur 1 nicht näher dargestellt sind. Ist das Trägergas auf das entsprechende Temperaturniveau gebracht worden, tritt das Trägergas in die Dosiereinheit 5 ein. In der Dosiereinheit 5 wird dem aufgeheizten Trägergas über einen Dosierkanal 6 eine definierte reproduzierbare Menge des Katalysatorelementes über eine Dosiereinheit bspw. in Form einer Doppelkolbenpumpe zugeführt. Das Katalysatorelement dient dazu, den Aushärteprozess für den Sandkern zu beschleunigen.

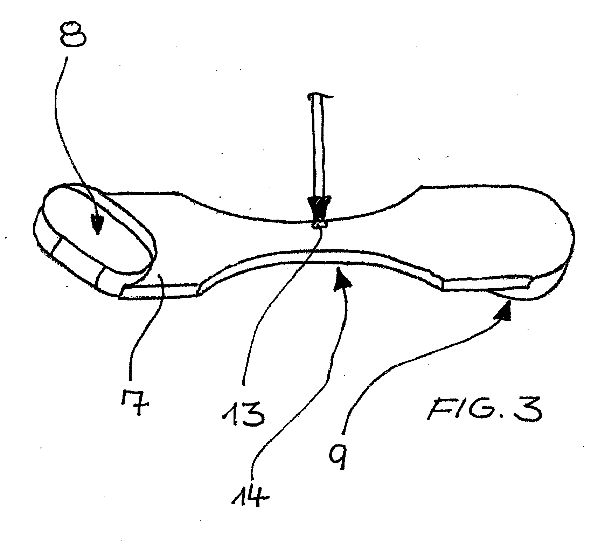

Zum Zwecke der Vermischung zwischen Katalysatorelement und Trägergas besitzt die Dosiereinheit 5 einen Strömungskanal 7, der eine zur Aufheizvorrichtung 4 weisende Verbindungsöffnung 8 und eine aus der Figur 3 ersichtliche Austrittsöffnung 9 als Übergang zu einem Kernformwerkzeug aufzeigt.

Die erfindungsgemäß zur Vorrichtung gehörende Vorwärmvorrichtung 2 führt einen Teil der Wärmeenergie, die zur Aufheizung des Trägergases in der Aufheizvorrichtung dient ab und ermöglicht es so, das Trägergas, wie oben geschildert, vorzuwärmen. Durch diese Maßnahme wird im Gegensatz zu aus dem Stand der Technik bekannten Vorrichtungen der Gesamteinsatz an notwendiger Wärmeenergie zur Herstellung der erforderlichen Trägergastemperatur signifikant herabgesetzt.

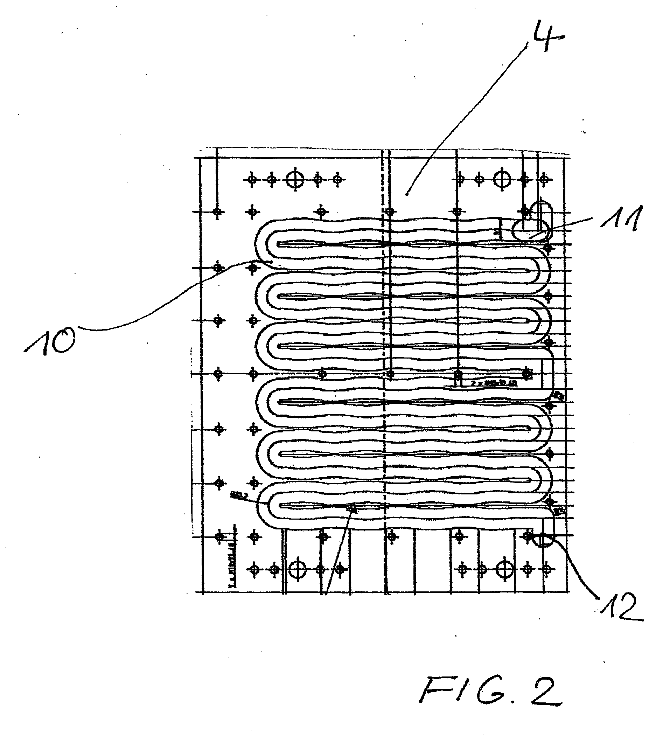

Um den Wärmeübergang im Bereich der Aufheizvorrichtung 4 zwischen Trägergas und Heizkörpern im Trägergaskanal 10 innerhalb des Aufheizvorrichtungsgehäuses zu verbessern, ist der Trägergaskanal 10 strömungstechnisch schlangenförmig optimiert. Wie aus der Figur 2 ersichtlich ist, sind die Wände des Trägergaskanals 10 wellenförmig ausgebildet. Durch nicht näher dargestellte Heizstäbe wird das den Trägergaskanal 10 durchströmende Trägergas von der Einlassöffnung 11 als Anschluss an das Verbindungsrohr 3 zur Auslassöffnung 12 als Anschluss an die Verbindungsöffnung 8 des Strömungskanals 7 der Dosiereinheit 5 geführt.

Wie oben geschildert, dient der Strömungskanal 7 dazu, das Trägergas mit dem Katalysatorelement zu vermischen. Das Katalysatorelement wird etwa mittig in den Strömungskanal 7 durch eine Anschlussöffnung 13, das Bestandteil des Dosierkanals 6 ist, eingebracht. Die Dosierung des Katalysatorelementes erfolgt durch den Einsatz einer Dosiereinheit, die mit dem Dosierkanal 6 verbunden ist.

Im Bereich der Anschlussöffnung 13 ist der Strömungskanal 7 verengt, wobei der Querschnitt des Strömungskanals 7 strömungsgünstig ausgebildet sein kann. Diese spezielle Ausgestaltung hat den Vorteil, dass die Strömungsgeschwindigkeit der Trägergas im Strömungskanal 7 im Bereich der Strömungskanalverengung 14 gesteigert wird, so dass eine effektivere Durchmischung der Trägergas mit dem durch die Anschlussöffnung 13 des Dosierkanals 6 eingebrachtes Katalysatorelement erfolgt.

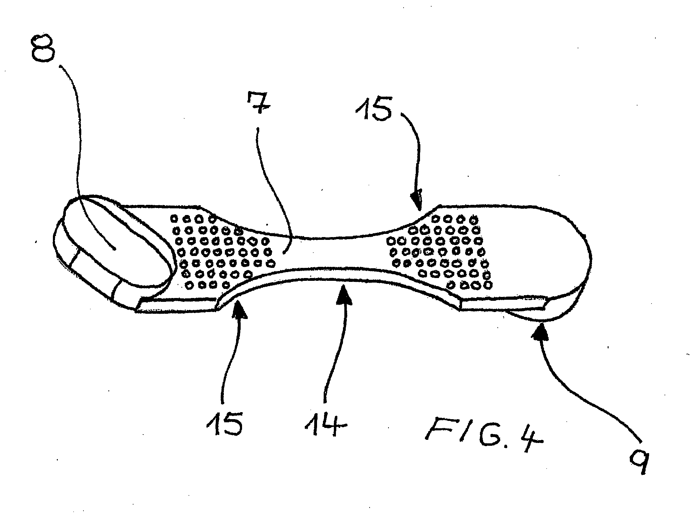

In der Figur 4 ist der Strömungskanal 7 in Analogie zur Figur 3 dargestellt, wobei in den Strömungskanal 7 im Bereich vor und nach der Strömungskanalverengung 14 eine Vielzahl von Energiespeicherelementen 15 eingebracht sind. Die Energiespeicherelemente 15 können wie in Figur 4 dargestellt unterschiedliche Gestalt aufweisen, beispielsweise in kugelförmiger und oder in elipsenförmiger Gestaltung.

Durch die Verwendung der Energiespeicherelemente 15 stellt sich zusätzlich der Effekt ein, dass innerhalb des Trägergaskanales eine diffuse Strömung sich ergibt.

Das hat den Vorteil, dass sich eine effektive Durchmischung des Katalysatorelementes mit dem Trägergas einstellt. Durch die Wärmespeicherungskapazität der Energiespeicherelemente 15 ist ein Abkühlen der Temperatur zwischen der Entnahme des fertig hergestellten Sandkerns aus dem Kernformwerkzeug und dem Beginn der Sandkernherstellung nicht gegeben. Somit können Temperaturunterschiede kompensiert und Energie eingespart werden.

Bevorzugte Materialien der Energiespeicherelemente 15 sind hochleitfähige Materialien wie beispielsweise Eisen, Kupfer oder Aluminium. Die Energiespeicherelemente 15 können massiv ausgestaltet sein oder in ihrem Inneren innerhalb eines Hohlraumes ein Energieträgermedium aufweisen.

### Bezugszeichenliste:

- 1: Einlassstutzen
- 2: Vorwärmevorrichtung
- 3: Verbindungsrohr
- 4: Aufheizvorrichtung
- 5: Dosiereinheit
- 6: Dosierkanal
- 7: Strömungskanal
- 8: Verbindungsöffnung
- 9: Austrittsöffnung
- 10: Trägergaskanal
- 11: Einlassöffnung .
- 12: Auslassöffnung
- 13: Anschlussöffnung
- 14: Strömungskanalverengung
- 15: Energiespeicherelement

## Patentansprüche

1. Vorrichtung zur Versorgung eines Kernformwerkzeuges zur Herstellung eines Sandkerns für Gussteile mit einem gasförmigen Aushärtemedium für den Sandkern, wobei das Aushärtemedium aus einem Gemisch von Trägergas und einem Katalysatorelement besteht, mit einer Trägergasquelle, einer Aufheizvorrichtung für das Trägergas und einer Dosiereinheit für das Katalysatorelement,
**dadurch gekennzeichnet,**
**dass** zwischen Trägergasquelle und Aufheizvorrichtung (4) eine durch die Aufheizvorrichtung (4) mit Wärmeenergie gespeiste Vorwärmevorrichtung (2) für das Trägergas angeordnet ist, wobei Aufheizvorrichtung (4), Vorwärmevorrichtung (2) und Dosiereinheit (5) trennbar als Einzelmodule ausgestaltet sind.

2. Vorrichtung nach Anspruch 1,
**dadurch gekennzeichnet, dass**
in der Aufheizvorrichtung (4) mindestens ein strömungsbegünstigt ausgebildeter Trägergaskanal (10) angeordnet ist, wobei die Wandungen des Trägergaskanals (10) wellenförmig ausgebildet sind.

3. Vorrichtung nach einem der Ansprüche 1 oder 2,
**dadurch gekennzeichnet, dass**
die Dosiereinheit (5) einen Strömungskanal (7) aufweist, der eine zur Aufheizvorrichtung (4) weisende Verbindungsöffnung (8) und eine zum Kernformwerkzeug weisende Austrittsöffnung (9) aufweist, wobei zwischen Verbindungsöffnung (8) und Austrittsöffnung (9) eine Strömungskanalverengung (14) vorhanden ist und im Bereich dieser Strömungskanalverengung (14) ein Dosierkanal (13) für das Katalysatorelement mündet.

4. Vorrichtung nach Anspruch 3,
**dadurch gekennzeichnet, dass**
die Stömungskanalverengung (14) eine strömungsgünstige Gestaltung aufweist.

5. Vorrichtung nach Anspruch 4,
**dadurch gekennzeichnet, dass**
im Bereich des Strömungskanals (7) vor und nach der Strömungskanalverengung (14) eine Vielzahl von strömungsgünstigen Energiespeicherelementen (15) angeordnet sind.

6. Vorrichtung nach Anspruch 5,
**dadurch gekennzeichnet, dass**
die Energiespeicherelemente (15) eine permeable Packungsdichte aufweisen.

7. Vorrichtung nach Anspruch 5,
**dadurch gekennzeichnet, dass**
die Energiespeicherelemente (15) eine kugelförmige oder elipsenförmige Außengestalt aufweisen.

8. Vorrichtung nach Anspruch 7,
**dadurch gekennzeichnet, dass**
die Energiespeicherelemente (15) mit einem in ihrem Inneren befindlichen Energieträgermedium versehen sind.

9. Vorrichtung nach einem der Ansprüche 5 bis 7,
**dadurch gekennzeichnet, dass**
die Energiespeicherelemente (15) aus einem hochleitfähigen Material bestehen.

10. Vorrichtung nach Anspruch 8,
**dadurch gekennzeichnet, dass**
das Material der Energiespeicherelemente (15) Eisen, Kupfer, Aluminium ist.

11. Vorrichtung nach einem der Ansprüche 1 bis 10,
**dadurch gekennzeichnet, dass** eine Dosiereinheit für den Katalysator eingesetzt wird.

12. Vorrichtung nach Anspruch 11,
**dadurch gekennzeichnet, dass** als Dosiereinheit eine Doppelkolbenpumpe eingesetzt wird.
